# EUROPEAN PATENT SPECIFICATION

(11) **EP 0 360 501 B1**
(45) Date of publication and mention of the grant of the patent: **03.07.1996**
(21) Application number: 89309375.7
(22) Date of filing: 15.09.1989
(51) Int. Cl.: G06F 17/21

(54) **A text-editing apparatus with real time display function**
Textverarbeitungsapparat mit Fähigkeit zur Echtzeitdarstellung
Appareil de traitement de textes avec la capacité pour affichage en temps réel

(30) Priority: 21.09.1988 JP 238284/88
(43) Date of publication of application: 28.03.1990
(73) Proprietor: SHARP KABUSHIKI KAISHA, Osaka (JP)
(72) Inventor: Nagaya, Toshikazu, Yamatokoriyama-shi Nara-ken (JP); Fujimura, Shigeru, Nara-shi Nara-ken (JP); Nakane, Futoshi, Nara-shi Nara-ken (JP); Harada, Shigeaki, Nara-shi Nara-ken (JP); Yamamoto, Yasushi, Nara-shi Nara-ken (JP); Takiguchi, Yasuhiro, Nara-shi Nara-ken (JP)
(74) Representative: Hitchcock, Esmond Antony

(56) References cited:
- EP-A- 0 062 121

## Description

This invention is related to a text-editing apparatus used for preparing text, and for editing text.

Text-editing apparatus, a word processor for example, are conventionally designed in such a way that, when editing text being output on the screen, its operator is to input character data or various instructions by moving cursor to a position on the display screen where such editing is to be carried out, and that the text edited according to such input would be displayed on the display screen in updated manner.

A text precessing apparatus is disclosed in European Specification No. 62,121 in which keystrokes inputted by the operator into a buffer are directly mapped onto a display screen. Any characters 'spilt' from the end of a line are placed in an auxiliary store for access in a reformatting process when no keystrokes are pending.

In most of conventional word processors or like apparatus, though line spacing and/or character spacing may be specified, their screen do not reflect the content of such specification. However, some of the recently developed word processors may display the text on the screen in the same typography, same character size, and using the same layout as the printed document. Japanese Patent Laid-Open Publication No. 61-295595 titled "LINE INFORMATION STORAGE METHOD FOR INPUT EDITING DEVICE" discloses a method in which information associated with a line including the position data for the head and end of the line are stored in the character data group of each line. The object of such method is to achieve simplified data processing such as of insertion and/or delete or character(s) that has been input into an area having an arbitrary frame.

On the other hand, in displaying of those recently developed word processors, it is required not only to provide various typographies and character sizes, and highly advanced layout function, but also to display the printing image and to instantly display such printing image in response to input by the operator.

In achieving such highly advanced layout display, however, the processing speed has been slower because of complicated display processing involved. Responsiveness of display to input by the operator was thus deteriorated, causing a disadvantage that editing could not be performed effectively.

The present invention is directed at a text-editing apparatus with real time display function, comprising:
input means for inputting an input data including character data and editorial instruction;
editing means for editing text in response to the input data input from the input means;
text storage means for storing the text edited by the editing means;
display means for displaying the edited text;
line display management data storage means for storing line display management data for the management by lines of a displayed image of each line of the text;
display image expanding means for outputting to the display means the text stored in the text storage means by serially expanding the text from each line head according to the line display management data;
updating means for updating line by line, when the input data is input from the input means during editing, the line display management data with respect to the line corresponding to the input data and the lines thereafter; and
verifying means for verifying whether or not a second input data is further being input from the input means whenever displaying again the text by lines according to the line display management data which has been updated by the updating means.

According to the invention the text-editing apparatus comprises interruption means for interrupting, when the input of the second input data is verified, the redisplaying according to the updating means, while retaining the line display management data of the line that is being displayed again and to be displayed next as well as the first input data; and
display control means to resume the redisplaying from the line of which the line display management data has been retained, after updating line by line the line display management data of the line that corresponds to the second input data and of the lines thereafter, and also after displaying again according to the updating means, by providing the second input data to the updating means upon the interruption of redisplaying.

The input means is composed preferably of a keyboard but may consist of a pointing device such as a tablet input device or a mouse.

The editing means may be composed of CPU as the input processing unit.

The text storage means may be composed of write enable character code memory which may store the character codes.

The display means may be composed of a dot matrix type display device such as a CRT, LCD, or EL display.

The line display management data storing means may be composed of the line display management data memory of which written content may be rewritten, and which memorizes, correspondingly to each line of the text, the offset value from the memory leader that indicates the location in the character code memory with respect to the leading character of a line, the number of characters to be inserted into said line, the positioning coordinate on the display screen at which said line is to be displayed, and flags indicating editorial condition.

The display image expanding means may be composed of video RAM as the screen image memory.

The updating means, the verifying means, the interruption means, and the display control means may be composed of the CPU as the display output control unit.

By pursuing this invention, when editing a text, if a new editorial input is entered during for example updating the display of a inserted sentence,the updating of display for the inserted sentence, is once interrupted in response to the new input, and the updating of display is to be resumed from the point at which said interruption occurred after executing the updated display of such input sentence.

It is therefore according to this invention that the updated display of a sentence resulting from its editing and/or proofreading may be presented within the least displaying space possible, and that the editing operation may be smoothly and effectively carried out by an operator because of the improved responsibility to an editing and/or proofreading input.

An embodiment of the invention will now be described by way of example and with reference to the drawings, in which:
Fig.1 is a bloc diagram indicating the composition of a word processor according to this invention;
Fig.2 indicates the composition of a line display management data;
Fig.3 shows an example of the display screen.
Figs.4(a)∼4(d) show the display screens during editing; and
Figs.5(a)∼5(d) are flowcharts showing the operation during editing of the input processing unit and the display control unit.

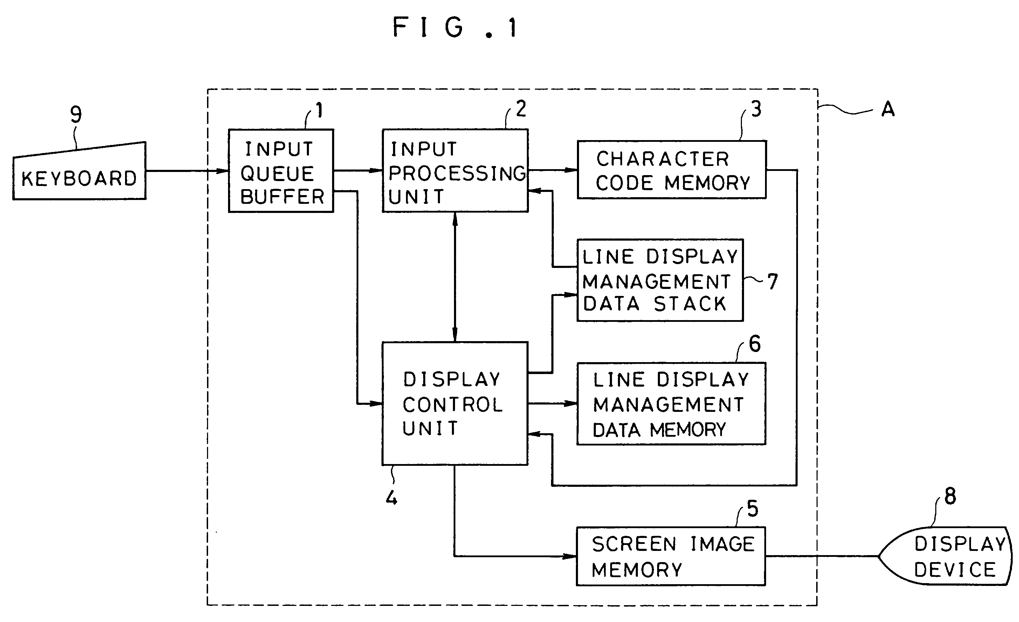

Referring to Fig.1, the reference numeral 1 indicates a queue buffer of the operator input, which is the queue of unprocessed operator input being buffered. The input processing unit 2 is to process character input or command input by the operator being located at the head of the queue buffer 1. The numeral 3 indicates the character code memory in which the character codes and control codes of a sentence that is currently edited are stored serially from its head. That is, the memory for storing the character input by the operator through a keyboard or storing text read-out from the files on any storage device such as a hard disk, and a sentence may be edited by editing the character code string in this memory. If, in the editing mode for example, the input event being buffered at the head of the input queue buffer 1 is an character input, the input processing unit inserts said character code into the character code memory 3. Also, if the command is "delete", the input processing unit 2 deletes the designated character code string from the character code memory 3. The operations involved in these steps will not be described in detail, because the conventional techniques of text inputting and editing may be appropriately used.

The portion characterizing this invention, that is, the display output control unit is composed of the display control unit 4; the line display management data memory 6; and the line display management data stack 7. Incidentally, the reference numeral 5 indicates a screen image memory for storing the bit images to be displayed on the screen and for outputting the screen image on the display device 8. The numeral 9 indicates the keyboard for inputting the input data consisting of character data and editorial instructions, and such input data are input into the input queue buffer 1. The symbol A is the main body of a word processor.

The display output control unit referred to as above will now be described in more detail.

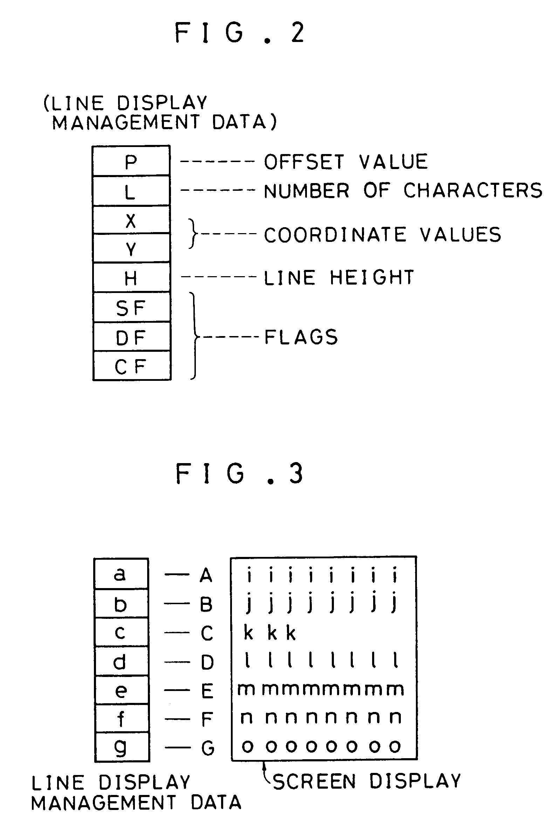

The line display management data memory 6 is a memory to store the line display management data line by line. An example of the composition of such a "line display management data" is shown in Fig.2. The line display management data that corresponds to each line of the text represents logically the image of that line and occurs as many as the number of lines therein. The elements of the line display management data are as follows. P is the offset value from the memory head indicating the locating in the character code memory 3 with respect to the leading character of the line. The symbol L indicates the number of characters to be inserted in that line. The symbols X and Y indicate respectively the horizontal and vertical coordinates of a position at which the line should be displayed. The symbol H is the height of the line. The symbol SF is a flag to indicate whether the line is the first line of a paragraph (i.e., if or not the last character of the immediately preceding line is a line feed character). The symbol DF is a flag to indicate that the display of the line is being interrupted by "display interrupt processing" which will be described later. And the symbol CF is a flag to indicate that the offset value P is an incorrect value for the lines following that line. By these informations, it can be seen how many characters from which character at what position should be displayed with respect to said line.

The display control unit 4 is for controlling display processing by generating, erasing, and/or updating the line display management data. Further, thus prepared line display management data which is now stored in the line display management data memory 6 and the character code string stored in the character code memory 3 are expanded actually into the image of said line at the screen image memory 5.

The line display management data stack 7 is the memory to retain the line display management data of the line that is to be next processed for display, when such displaying is interrupted by "display interruption processing" which will be later described.

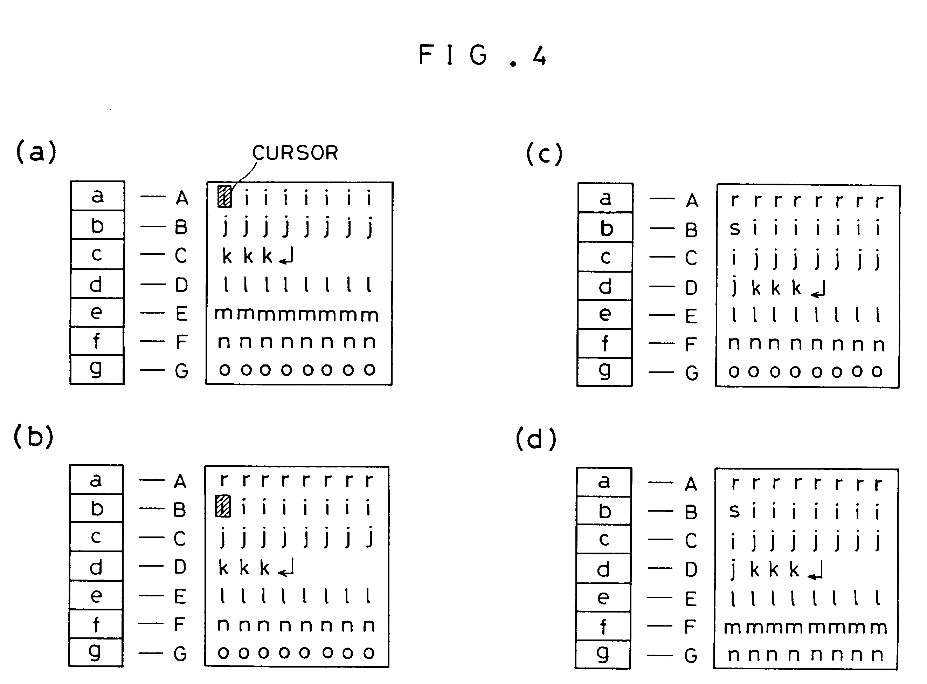

The operation of the display output control unit will now be described with reference to the screens in Figs.3 and 4 being expanded into the screen image memory 5.

First of all, a screen example is shown in Fig.3. The symbols A ∼ G in Fig.3 are the codes respectively given to each line for the convenience of explanation, and are not among the characters being displayed on the screen. The symbols a ∼ g supposedly represent the line display management data corresponding to A ∼ G in the line display management data memory. The display control unit 4 expands an image into the screen image memory 5 by referring both to the line display management data a ∼ g and character code string in the character code memory 3, the screen display shown in Fig.3 being the result.

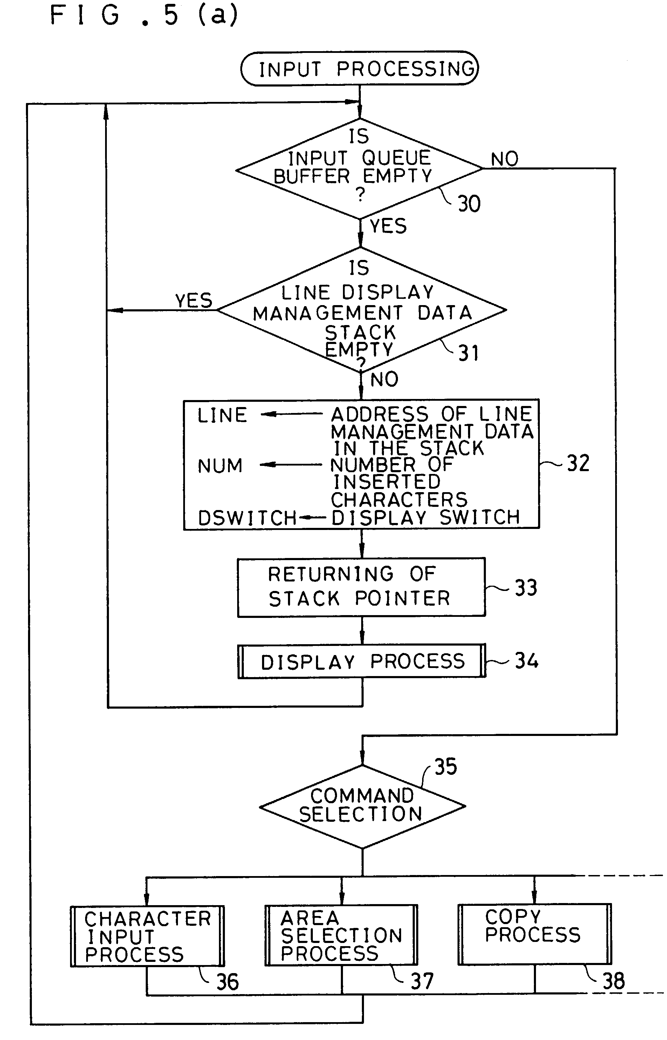

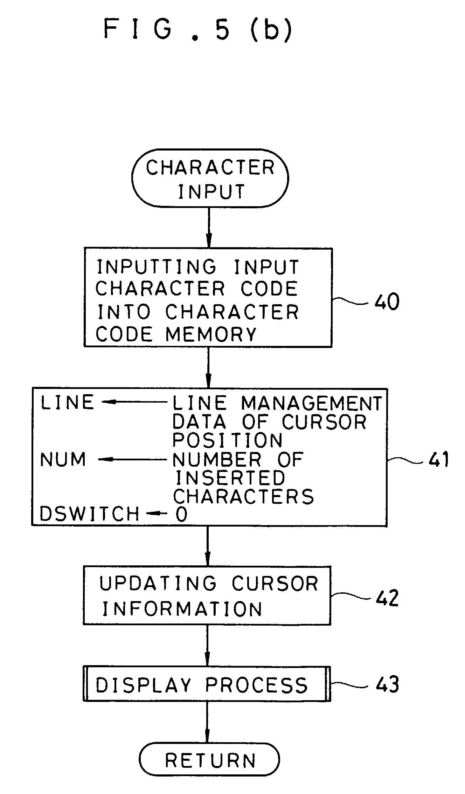

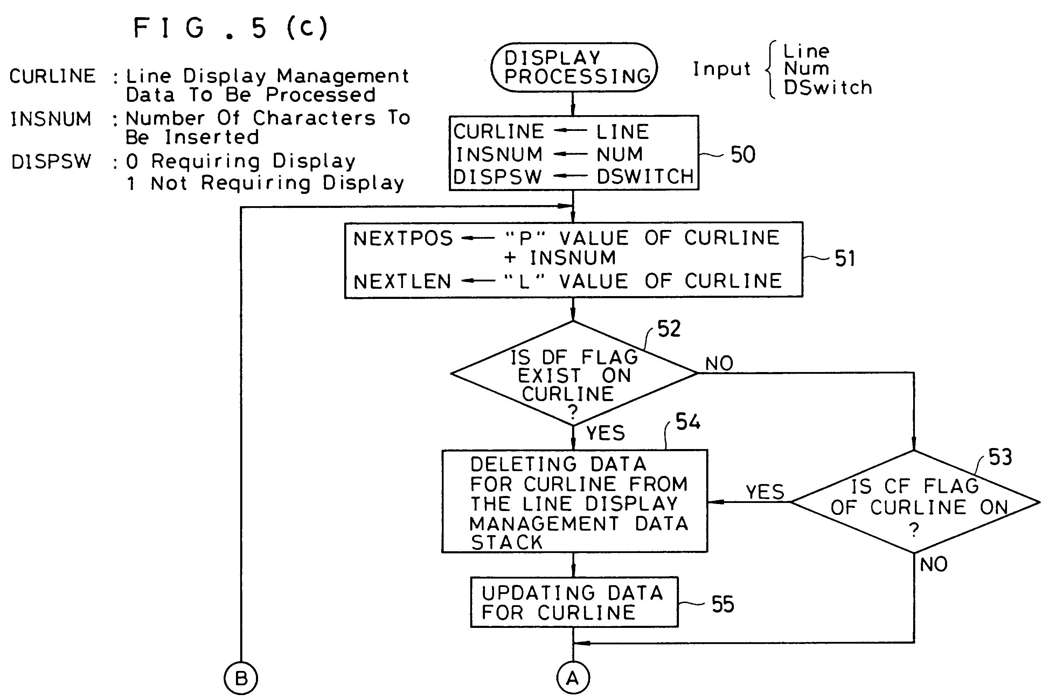

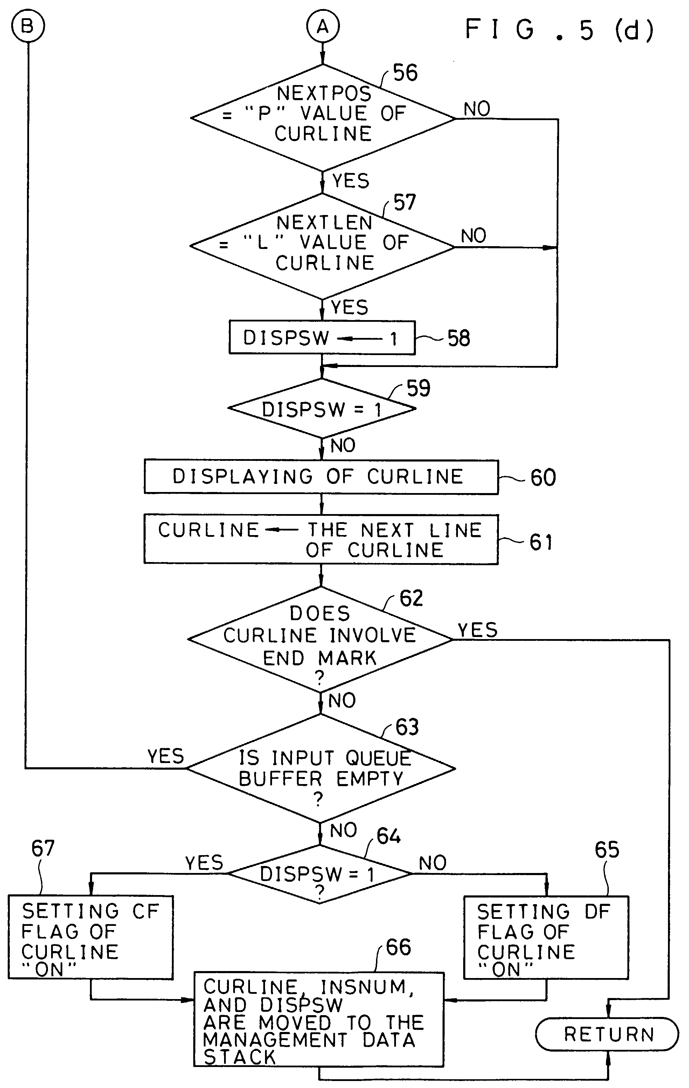

Next, the "display interruption processing" will be described by taking an example in which character insertion is carried out in the condition of Fig.3 and according to the flowcharts as shown in Fig.5.

### Input Processing

As the first step of input processing indicated in Fig.5(a), it is decided whether or not the content of the input queue buffer 1 is empty (step 30), and, if yes, also whether or not the content of the line management data stack 7 is empty (step 31). If "no" is resulted at this point, the content of the line management data stack is read-out (step 32), the stack pointer indicating the address of the line management data stack is returned (step 33), display processing is carried out (step 34), and is ready for command selection (step 35).

Although the command selection may be one of such as character input (step 36), area selection processing (step 37), and copying (step 38), the character input is selected in this example.

### Character Input

Fig.4(a) shows the same condition as Fig.3, and the small marked rectangle in the figure represents a cursor. In this condition, it is supposed that a character string , "rrr...r" (8 characters in length), which equals exactly one line has just been inserted into the current cursor location. Firstly, as in Fig.5(b), eight character codes (each character code corresponding to "r") are stored into said location in the character code memory 3 by the input processing unit 2 (step 40). It is at this point that the line management data of the line in which the cursor is located, the number of inserted characters "8", and the display mode are set respectively (step 41), that the cursor data is updated (step 42), and that display processing is carried out (step 43).

That is, when the input processing unit 2 ends its processing, the control is transferred to the display control unit 4 with the information, "address of line display management data a of the line A" and "8 characters having been inserted".

### Display processing

In Figs.5(c) and 5(d), the display control unit 4 updates the content of the line display management data a to which an address has been given (step 50). Subsequent to this step, the number of the inserted characters is added to the offset value P in the character code memory 3 of the original leading character of the line A (step 51). And, if the display interruption flag, i.e., the DF flag is occur in the subject line display management data (step 52), or if the CF flag is on (step 53), the subject line display management data is deleted from the line display management data stack 7 (step 54), and the subject line display management data is updated (step 55). Further, by comparing the offset value P in the character code memory of the original leading character of the line A to which the number of the inserted characters has been added with the offset value P in the character code memory of the new leading character (step 56), and by comparing their numbers of characters (step 57), if no change, there will be no updated display (step 58), and if any changes, display processing of the subject line display management data will be executed. That is, the image of the line A is expanded into the screen image memory 5, and the line A is displayed in the updated manner on the screen of the display device 8 (steps 59 ∼ 60).

Subsequently, the subject line is moved to the next line (step 61), whereby it is decided whether or not the text ends in the next line (step 62), and if the text continues further on, the display control unit 4 verifies whether or not the operator input is being buffered in the input queue buffer 1 (step 63).

If there is no operator input, it proceeds to the processing of the next line, and the lines B, C, D, and E will be displayed in their updated manner by repeating the process described above.

It is now supposed that some operator input is input into the input queue buffer 1, at the moment after displaying again the line E (Fig.4(b)) (step 63). Let us suppose for example that one character, "s", has been further inserted at the cursor location (which is now at the head of the line B as a result of the characters insertion). The display control unit 4 sets the DF flag on (steps 64 ∼ 65), and stacks into the line display management data stack 7 the address of the line display management data of the line to be processed next and accompanying data (such as the address of the line display management data f and the number of inserted characters in this case) (step 66). Incidentally, if YES being the case, in the step 64, the CF flag is set (step 67) before advancing to the step 66. When such stacking ends; the display control unit 4 transfers the control to the input processing unit 2. The input processing unit 2 read-out the input from the input queue buffer 1, and carries out its processing. In this particular case, the character code of the character "s" that has been input is inserted into the character code memory 3. And, just as when characters "rrr...r" were inserted previously, the control is transferred again to the display control unit 4 with the information "the address of line display management data b of the line B" and "one character having been inserted". The display control unit 4 updates and displays lines B, C, and D in that order (if there is no input for that time being) in the same manner as the above mentioned process (Fig.4(c)). In this case of inserting "s", because only the lines down to D are affected, the updated display ends at that point. If, for example, the line display management data e is updated, it can be seen that no changes in L (the number of character) occurs, and the location obtained by adding the number of the inserted characters to the location P in the character code memory of the original leading character equals the location P in the character code memory of the new leading character, effecting no changes in that line and thereafter. At this point, as a series of redisplaying associated with the inserting of the character "S" has ended, the display control unit 4 returns the control to the input processing unit 2.

The input processing unit 2 likewise looks up the input queue buffer 1, and, when verifying no next input therein, checks if there is any data in the line display management data stack 7. Since, in the present case, the data of display interruption during the previous processing is stored, the input processing unit 2 read-out such data from the stack 7, and transfers the control again to the display control unit 4 together with that information.

Based on given information (the address of the line display management data f and the number of inserted characters, 8), the display control unit 4 displays again the lines F and G in the same manner as the above mentioned steps (Fig.4(d)). When such a series of redisplay processing associated with the characters "rrr...r" have thus ended, the control is again returned to the input processing unit 2.

Although, in the embodiment described above, the second insertion (i.e., the insertion of "s") affected only down to the line D, if this had as well affected for example down to those following lines such as F and G, the line display management data f of the line F is naturally updated during the series of updated display processing associated with input of "s", and the line F will be displayed in the updated manner. Incidentally, because the address of the line display management data f and its accompanying data has been stacked in the stack 7 since the interruption of redisplay processing related to the first insertion (i.e., insertion of "rrr...r"), if it is left as it has been, the redisplay processing of the lines F and thereafter will be carried out again upon the ending of the redisplay processing related to the second insertion. To prevent this, the DF flags are set with respect to the line display management data of which the address have been stacked in the line display management data stack 7. And, when the display control unit 4, during redisplay processing, reaches the line display management data of which the DF flag is on, it carries out such a processing that the address of said display management data and its accompanying data on the line display management data stack are erased.

Further, if one character is inserted into the line A that is in the condition of Fig.3, its effect on display gets as far as the line C, but not to the lines thereafter. However, among the line display management data of these following lines, one must be added to each P (the location of the leading character of a line in the character code buffer). This adding process is also carried out line by line in the same manner as redisplay processing, and, if there is any operator input during the process, the adding process is interrupted and the line display management data and accompanying data are stacked in the line display management data stack 7 just as the redisplay processing, then, instead of the above described DF flag, the CF flag of said line display management data is set, and the control is transferred to the input processing unit 2. When the display control unit 4 during the redisplay processing reaches the line display management data of which the CF flag is on, a processing is carried out with respect to the CF flag that erases the address of said display management data on the line display management data stack and it's accompanying data in the same manner as described above for the DF flag.

Although only one embodiment of the invention has been disclosed and described, it is apparent that other embodiments and modification of the invention, may be achieved such as in a word processor using the European alphabet or may be composed of a computer provided, instead of a word processor, with a function for editing text, without losing the advantage of this invention.

## Claims

1. A text-editing apparatus (9,A,8) with real time display function comprising:
input means (9) for inputting an input data including character data and editorial instruction;
editing means (2) for editing text in response to the input data input from the input means (9);
text storage means (3) for storing the text edited by the editing means;
display means (8) for displaying the edited text;
line display management data storage means (6) for storing line display management data for the management by lines of a displayed image of each line of the text;
display image expanding means (4,5) for outputting to the display means the text stored in the text storage means (3) by serially expanding the text from each line head according to the line display management data;
updating means (4) for updating line by line, when the input data is input from the input means (9) during editing, the line display management data with respect to the line corresponding to the input data and the lines thereafter; and
verifying means (1,4) for verifying whether or not a second input data is further being input from the input means (9) whenever displaying again the text by lines according to the line display management data which has been updated by the updating means (4),
CHARACTERISED IN THAT
the apparatus comprises interruption means (4) for interrupting, when the input of the second input data is verified, the redisplaying according to the updating means (4), while retaining the line display management data of the line that is being displayed again and to be displayed next as well as the first input data; and
display control means (4) to resume the redisplaying from the line of which the line display management data has been retained, after updating line by line the line display management data of the line that corresponds to the second input data and of the lines thereafter, and also after displaying again according to the updating means (4), by providing the second input data to the updating means upon the interruption of redisplaying.

2. The text-editing apparatus (9,A,8) according to Claim 1, wherein said text storage means (3) comprises read-write memory for storing ascii codes.

3. The text-editing apparatus (9,A,8) according to Claim 2, wherein said line display management data storage means (6) comprises a write enable memory and which memorizes, correspondingly to each line of the text, the offset value which indicates the location in the read-write memory with respect to the leading character of a line; the number indicating the number of characters to be inserted into said line; the positioning coordinates in a display image at which said line should be displayed; and flags indicating editing conditions.

4. The text-editing apparatus (9,A,8) according to any preceding Claim, wherein said display image expanding means (4,5) comprises video RAM (5) for storing a display image.

5. The text-editing apparatus (9,A,8) according to any preceding Claim, wherein said interruption means (4) includes a stack for retaining the line display management data and first input data.

## Patentansprüche

1. Textverarbeitungsgerät (9, A, 8) mit Echtzeitdarstellung, mit:
- einer Eingabeeinrichtung (9) zum Eingeben von Eingabedaten, zu denen Zeichendaten und Editieranweisungen gehören;
- einer Editiereinrichtung (2) zum Editieren von Text auf die über die Eingabeeinrichtung (9) eingegebenen Eingabedaten hin;
- einer Textspeichereinrichtung (3) zum Speichern des durch die Editiereinrichtung editierten Texts;
- einer Anzeigeeinrichtung (8) zum Anzeigen des editierten Texts;
- einer Zeilenanzeige-Verwaltungsdaten-Speichereinrichtung (6) zum Einspeichern von Zeilenanzeige-Verwaltungsdaten für die Verwaltung mittels Zeilen eines angezeigten Bilds für jede Textzeile;
- einer Anzeige-Bildentwicklungseinrichtung (4, 5) zum Ausgeben des in der Textspeichereinrichtung (3) abgespeicherten Texts durch serielles Entwickeln des Texts ausgehend von jedem Zeilenkopf entsprechend den Zeilenanzeige-Verwaltungsdaten an die Anzeigeeinrichtung;
- einer Aktualisierungseinrichtung (4) zum Aktualisieren, Zeile für Zeile, wenn Eingabedaten während des Editiervorgangs von der Eingabeeinrichtung (9) eingegeben werden, der Zeilenanzeige-Verwaltungsdaten hinsichtlich der den Eingabedaten entsprechenden Zeile und der nachfolgenden Zeilen; und
- einer Verifiziereinrichtung (1, 4) zum Verifizieren, ob von der Eingabeeinrichtung (9) ein zweiter Eingabedatenwert eingegeben wird oder nicht, und zwar immer dann, wenn der Text zeilenmäßig erneut entsprechend den Zeilenanzeige-Verwaltungsdaten angezeigt wird, die durch die Aktualisierungseinrichtung (4) aktualisiert werden;
**dadurch gekennzeichnet**, daß das Gerät folgendes aufweist:
- eine Unterbrechungseinrichtung (4) zum Unterbrechen, wenn die Eingabe eines zweiten Eingabedatenwerts verifiziert wird, der Neuanzeige entsprechend der Aktualisierungseinrichtung (4), während die Zeilenanzeige-Verwaltungsdaten für die erneut angezeigte Zeile, die als nächste zusammen mit den ersten Eingabedaten anzuzeigen ist, beibehalten werden; und
- eine Anzeigesteuereinrichtung (4) zum Wiederaufnehmen der Neuanzeige ab der Zeile, für die die Zeilenanzeige-Verwaltungsdaten aufrechterhalten wurden, nach dem Aktualisieren, Zeile für Zeile, der Zeilenanzeige-Verwaltungsdaten der Zeile, die dem zweiten eingegebenen Datenwert entspricht, und für die nachfolgenden Zeilen, und auch nach dem erneuten Anzeigen entsprechend der Aktualisierungseinrichtung (4) durch Liefern des zweiten Eingabedatenwerts an die Aktualisierungseinrichtung nach der Unterbrechung der Neuanzeige.

2. Textverarbeitungsgerät (9, A, 8) nach Anspruch 1, bei dem die Textspeichereinrichtung (3) einen Festwertspeicher zum Einspeichern von ASCII-Codes aufweist.

3. Textverarbeitungsgerät (9, A, 8) nach Anspruch 2, bei dem die Zeilenanzeige-Verwaltungsdaten-Speichereinrichtung (6) einen Schreibfreigabespeicher aufweist, der, entsprechend jeder Zeile des Texts, einen Versatzwert speichert, der den Ort im Festwertspeicher in bezug auf das führende Zeichen einer Zeile; die Zahl, die die Anzahl in diese Zeile einzufügender Zeichen angibt; die Positionskoordinaten auf dem Anzeigebild, an denen die Zeile angezeigt werden sollte; und Flags speichert, die Editierbedingungen anzeigen.

4. Textverarbeitungsgerät (9, A, 8) nach einem der vorstehenden Ansprüche, bei dem die Anzeige-Bildentwicklungseinrichtung (4, 5) einen Video-RAM (5) zum Einspeichern eines Anzeigebilds aufweist.

5. Textverarbeitungsgerät (9, A, 8) nach einem der vorstehenden Ansprüche, bei dem die Unterbrechungseinrichtung (4) einen Stapel zum Aufrechterhalten der Zeilenanzeige-Verwaltungsdaten und der ersten Eingabedaten enthält.

## Revendications

1. Appareil d'édition de texte (9,A,8) avec fonction d'affichage en temps réel comprenant :
un moyen d'entrée (9) pour entrer des données d'entrée comprenant des données de caractères et des instructions d'édition ;
un moyen d'édition (2) pour éditer le texte en réponse à l'entrée de données provenant du moyen d'entrée (9) ;
un moyen de mémorisation du texte (3) pour mettre en mémoire le texte édité par le moyen d'édition ;
un moyen d'affichage (8) pour afficher le texte édité ;
un moyen de mémorisation des données de gestion d'affichage (6) pour mettre en mémoire les données de gestion d'affichage de ligne pour la gestion par lignes d'une image affichée de chaque ligne du texte ;
un moyen de développement de l'image affichée (4,5) pour sortir au moyen d'affichage le texte mis en mémoire dans le moyen de stockage du texte (3) en développant séquentiellement le texte à partir de chaque tête de ligne suivant les données de gestion d'affichage de ligne ;
un moyen de mise à jour (4) pour mettre à jour ligne par ligne, lorsque les données d'entrée sont entrées depuis le moyen d'entrée (9) au cours de l'édition, les données de gestion d'affichage de ligne par rapport à la ligne correspondant aux données d'entrée et les lignes suivantes ; et
un moyen de vérification (1,4) pour vérifier si des deuxièmes données d'entrée sont aussi entrées depuis le moyen d'entrée (9) chaque fois que le texte est de nouveau affiché par lignes suivant les données de gestion d'affichage de ligne qui ont été mises à jour par le moyen de mise à jour (4),
CARACTERISE EN CE QUE
l'appareil comprend un moyen d'interruption (4) pour interrompre, lorsque l'entrée des deuxièmes données d'entrée sont vérifiées, le réaffichage suivant le moyen de mise à jour (4), tout en conservant les données de gestion d'affichage de ligne de la ligne qui est affichée de nouveau et doit être affichée ensuite ainsi que les premières données d'entrée ; et
un moyen de commande d'affichage (4) pour reprendre le réaffichage à partir de la ligne dont les données de gestion d'affichage de ligne ont été conservées, après avoir mis à jour ligne par ligne les données de gestion d'affichage de ligne de la ligne qui correspond aux deuxièmes données d'entrée et des lignes suivantes, et aussi après avoir affiché de nouveau suivant le moyen de mise à jour (4), en fournissant les deuxièmes données d'entrée au moyen de mise à jour lors de l'interruption du réaffichage.

2. L'appareil d'édition de texte (9,A,8) selon la Revendication 1, dans lequel ledit moyen de mémorisation du texte (3) comprend une mémoire de lecture-écriture pour mémoriser les codes ASCII.

3. L'appareil d'édition de texte (9,A,8) suivant la Revendication 2, dans lequel ledit moyen de mémorisation des données de gestion d'affichage des lignes (6) comprend une mémoire d'autorisation d'écriture et mémorise, de manière correspondante à chaque ligne du texte, la valeur de décalage qui indique l'emplacement dans la mémoire de lecture-écriture par rapport au caractère de gauche d'une ligne ; le nombre indiquant le nombre de caractères à introduire dans ladite ligne ; les coordonnées de positionnement dans une image affichée à laquelle ladite ligne doit être affichée ; et des drapeaux indiquant les conditions d'édition.

4. L'appareil d'édition de texte (9,A,8) selon l'une quelconque des Revendications précédentes, dans lequel ledit moyen de développement de l'image (4,5) comprend une mémoire RAM vidéo (5) pour mémoriser une image d'affichage.

5. L'appareil d'édition de texte (9,A,8) selon l'une quelconque des Revendications précédentes, dans lequel ledit moyen d'interruption (4) comprend une pile pour conserver les données de gestion d'affichage de lignes et les premières données d'entrée.
